# EUROPEAN PATENT APPLICATION

(11) **EP 4 641 079 A1**
(43) Date of publication of application: **29.10.2025**
(21) Application number: 23906918.0
(22) Date of filing: 15.12.2023
(51) Int. Cl.: F21S 43/16, F21S 43/14, F21S 43/145, F21S 43/237, F21S 43/243, F21W 103/00, F21Y 115/10, F21Y 115/15

(54) **VEHICLE LAMP**

(30) Priority: 23.12.2022 JP 2022207338
(71) Applicant: Ichikoh Industries, Ltd., Isehara-shi, Kanagawa 259-1192 (JP)
(72) Inventor: ARITAKE, Yasuo, Isehara-shi, Kanagawa 259-1192 (JP); IKENOUE, Sho, Isehara-shi, Kanagawa 259-1192 (JP)
(74) Representative: Lewis Silkin LLP
(86) International application number: PCT/JP2023/045019
(87) International publication number: WO 2024/135556

(57) **Abstract**

To provide a vehicle lamp capable of improving visibility. A vehicle lamp includes: a light source that emits excitation light; an optical member that guides and emits the excitation light from the light source; a light generation unit that has a light-emitting layer that emits generated light by being irradiated with the excitation light emitted from the optical member; a lens member that is arranged on a front face side with respect to the light-emitting layer and emits the generated light from the light-emitting layer in a front face direction; and a light source control unit that controls power supplied to the light source. A plurality of the light generation units are arranged side by side in a left-right direction and such that the light generation unit on a vehicle outer side is located closer to a back face side than the light generation unit on a vehicle inner side.

## Description

### TECHNICAL FIELD

The present disclosure relates to a vehicle lamp.

### BACKGROUND ART

A vehicle lamp including a light source, a reflector that reflects excitation light from the light source, a light-emitting layer that emits generated light by being irradiated with the excitation light reflected by the reflector, and a lens member that emits the excitation light from the light-emitting layer is known (for example, refer to PTL 1).

### CITATION LIST

### PATENT LITERATURE

PTL 1: Japanese Unexamined Patent Publication No. 2022-79423

### SUMMARY OF THE INVENTION

### PROBLEMS TO BE SOLVED BY THE INVENTION

The above-described vehicle lamp is required to improve visibility so as to be clearly visible from the outside.

The present disclosure has been made in view of the above, and an object of the present disclosure is to provide a vehicle lamp capable of improving visibility.

### MEANS FOR SOLVING THE PROBLEM

A vehicle lamp according to a first aspect of the present invention includes: a plurality of light sources that emit excitation light; an optical member that is provided for each of the light sources and emits the excitation light from the light source; a light generation unit that is provided for each of the optical members and has a light-emitting layer that emits generated light by being irradiated with the excitation light emitted from the optical member; a lens member that is provided for each light-emitting layer, is arranged on a front face side with respect to the light-emitting layer, and emits the generated light from the light-emitting layer in a front face direction in a vehicle-mounted state; and a light source control unit that controls power supplied to the plurality of light sources, in which a plurality of the light generation units are arranged side by side in a left-right direction in the vehicle-mounted state and such that the light generation unit arranged on a vehicle outer side is located closer to a back face side than the light generation unit arranged on a vehicle inner side.

A second aspect of the present invention is the vehicle lamp according to the above-described first aspect, in which the plurality of the light generation units are arranged such that adjacent ones of the light generation units partially overlap each other in the left-right direction.

A third aspect of the present invention is the vehicle lamp according to the above-described first aspect or second aspect, in which the light source control unit performs control such that the power supplied to the light sources increases as an area of a portion where the light generation units overlap each other in the left-right direction increases.

A fourth aspect of the present invention is the vehicle lamp according to any one of the above-described first aspect to third aspect, in which the plurality of the light generation units are arranged such that the light generation unit arranged on the vehicle outer side is inclined in a vehicle outer side direction with respect to the front face direction compared to the light generation unit arranged on the vehicle inner side.

A fifth aspect of the present invention is the vehicle lamp according to any one of the above-described first aspect to fourth aspect, in which the light source control unit performs control such that the power supplied to the light sources increases as an angle at which the light generation unit is inclined in the vehicle outer side direction with respect to the front face direction increases.

A sixth aspect of the present invention is the vehicle lamp according to any one of the above-described first aspect to fifth aspect, in which the optical member is formed of a light guide member, the light source is arranged on the back face side with respect to the light generation unit, and emits the excitation light upward, the light guide member is arranged above the light source and the light generation unit, guides the excitation light from the light source to the front face side, and emits the excitation light downward toward the light generation unit, and the light generation unit is arranged such that the light-emitting layer is formed in a flat plate shape and a normal direction of the light-emitting layer is oriented obliquely upward with respect to the front face.

A seventh aspect of the present invention is the vehicle lamp according to any one of the above-described first aspect to sixth aspect, in which the optical member is formed of a light guide member, and the light guide member has a first incident surface opposed to the light source in an up-down direction and a second incident surface surrounding a lateral side of the light source.

An eighth aspect of the present invention is the vehicle lamp according to any one of the above-described first aspect to seventh aspect, in which the optical member is formed of a light guide member, and the light guide member has a Fresnel lens portion that is provided on an incident surface on which the excitation light from the light source is incident or an emission surface from which the excitation light is emitted, and condenses the excitation light.

A ninth aspect of the present invention is the vehicle lamp according to any one of the above-described first aspect to eighth aspect, in which the optical member is formed of a light guide member, and the light guide member has a prism portion that internally reflects the guided excitation light such that the excitation light is diffused toward a side of the light-emitting layer.

### EFFECT OF THE INVENTION

According to the present disclosure, a vehicle lamp capable of improving visibility can be provided.

### BRIEF DESCRIPTION OF THE DRAWINGS

[FIG. 1] FIG. 1 is an exploded perspective view illustrating an example of a vehicle lamp according to the present embodiment.
[FIG. 2] FIG. 2 is a side sectional view illustrating an example of the vehicle lamp.
[FIG. 3] FIG. 3 is a diagram illustrating an example of the arrangement of a plurality of light generation units.
[FIG. 4] FIG. 4 is a diagram illustrating an example of the arrangement of the plurality of light generation units.
[FIG. 5] FIG. 5 is a diagram illustrating an example of the arrangement of the plurality of light generation units.
[FIG. 6] FIG. 6 is a diagram illustrating an example of the arrangement of the plurality of light generation units.
[FIG. 7] FIG. 7 is a diagram illustrating an example of a light-emitting state of the vehicle lamp.
[FIG. 8] FIG. 8 is a diagram illustrating another example of the arrangement of a light source unit, a light guide member, and a light generation unit.
[FIG. 9] FIG. 9 is a diagram illustrating another example of the arrangement of the light source unit, the light guide member, and the light generation unit.
[FIG. 10] FIG. 10 is a diagram illustrating another example of the arrangement of the light source unit, the light guide member, and the light generation unit.
[FIG. 11] FIG. 11 is a diagram illustrating another example of the arrangement of the light source unit, the light guide member, and the light generation unit.

### MODE FOR CARRYING OUT THE INVENTION

Hereinafter, an embodiment of a vehicle lamp according to the present disclosure will be described with reference to the drawings. The present invention is not limited to the embodiment. In addition, components in the following embodiment include components that can be easily replaced by those skilled in the art or substantially the same components. In the following description, respective directions of front and rear, up and down, and left and right are directions in a vehicle-mounted state in which the vehicle lamp is mounted on a vehicle, and indicate directions when a traveling direction of the vehicle is viewed from a driver's seat. In the present embodiment, the up-down direction is parallel to the vertical direction, and the left-right direction is the horizontal direction. Regarding a front face direction and a back face direction, a direction in which light is emitted from the vehicle lamp is defined as the front face direction, and a direction opposite to the front face direction is defined as the back face direction.

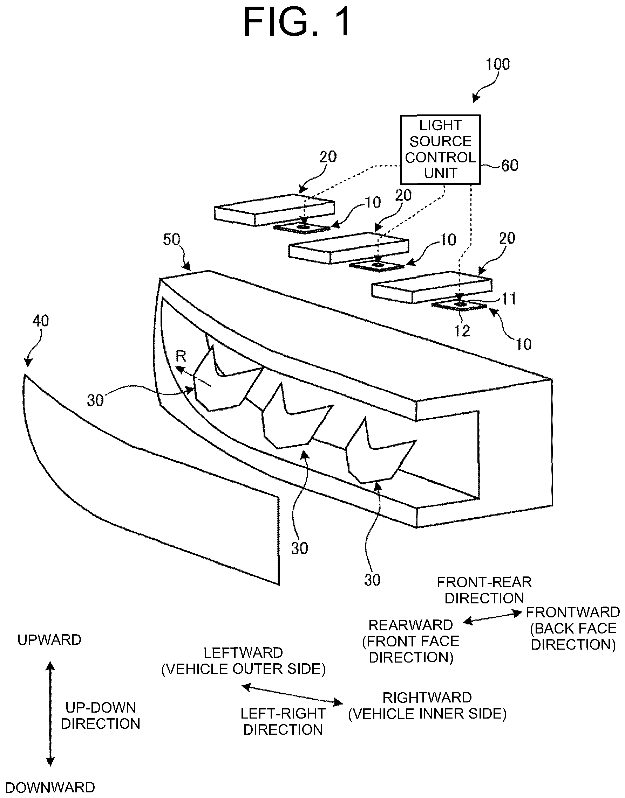

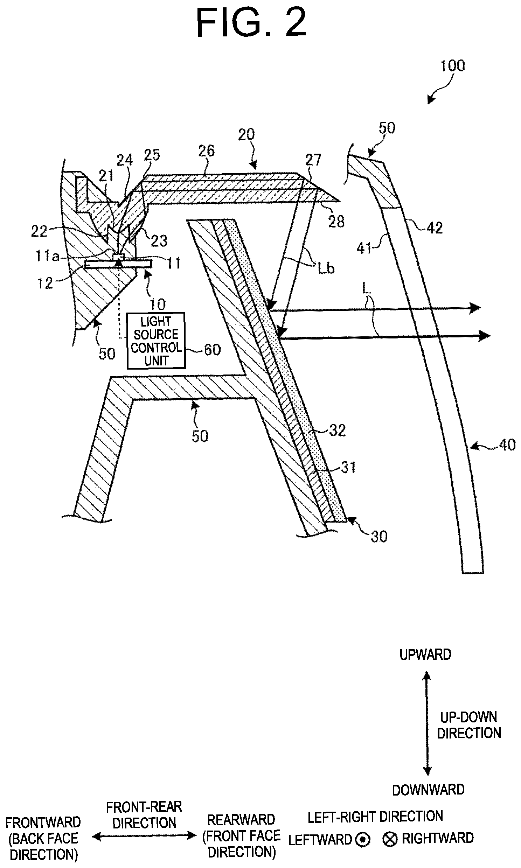

FIG. 1 is an exploded perspective view schematically illustrating an example of a vehicle lamp 100 according to the present embodiment. FIG. 2 is a side sectional view schematically illustrating an example of the vehicle lamp 100. The vehicle lamp 100 illustrated in FIGS. 1 and 2 is, for example, a signal lamp such as a tail lamp. Therefore, in the present embodiment, the front face direction is the rear direction (rearward), and the back face direction is the front direction (frontward). In addition, the left direction (leftward) indicates a vehicle outer side, and the right direction (rightward) indicates a vehicle inner side. The vehicle lamp 100 includes a light source unit 10, a light guide member (optical member) 20, a light generation unit 30, a lens member 40, a housing 50, and a light source control unit 60.

The light source unit 10 includes a light source 11 and a support substrate 12. The light source 11 is, for example, a light source such as an LED or an organic EL. The light sources 11 are provided in the number corresponding to the number of the light generation units 30 described below. A light-emitting surface 11a of the light source 11 is oriented upward. The light source 11 emits, for example, blue light as excitation light from the light-emitting surface 11a. The light source 11 is not limited to a light source that emits blue light, and a light source capable of emitting light (violet light, ultraviolet light, or the like) having a shorter wavelength than the wavelength of generated light generated in the light generation unit 30 described below can be used.

The light guide member 20 is provided for each of the light sources 11, and is arranged above the light source 11. The light guide member 20 is arranged inside the housing 50. The light guide member 20 is arranged to be hidden by the housing 50 so as not to be directly seen when the vehicle lamp 100 is viewed from the front face side.

The light guide member 20 has a first incident surface 21, a second incident surface 22, a first reflection surface 23, a first light guide portion 24, a second reflection surface 25, a second light guide portion 26, a third reflection surface 27, and an emission surface 28.

The first incident surface 21 is arranged above the light source 11 and to be opposed to the light-emitting surface 11a. Light traveling upward from the light-emitting surface 11a is incident on the first incident surface 21. The second incident surface 22 is arranged so as to surround the lateral side of the light-emitting surface 11a of the light source 11. Light traveling laterally from the light-emitting surface 11a is incident on the second incident surface 22. The first reflection surface 23 internally reflects the light incident from the second incident surface 22.

The first light guide portion 24 extends obliquely upward on the front face side from a portion where the first incident surface 21 and the second incident surface 22 are provided. The first light guide portion 24 guides the excitation light incident from the first incident surface 21 and the excitation light incident from the second incident surface 22 and reflected by the first reflection surface 23.

The second reflection surface 25 is arranged on the upper surface of the first light guide portion 24. The second reflection surface 25 internally reflects the excitation light guided by the first light guide portion 24 toward the second light guide portion 26.

The second light guide portion 26 extends toward the front face side from the first light guide portion 24. The second light guide portion 26 is provided such that a part thereof protrudes toward the front face side from the light generation unit 30. The second light guide portion 26 guides the excitation light internally reflected by the second reflection surface 25 toward the front face side.

The third reflection surface 27 is provided at the end portion of the second light guide portion 26 on the front face side. The third reflection surface 27 internally reflects the excitation light guided by the second light guide portion 26 downward.

The emission surface 28 is provided on the lower surface of the second light guide portion 26. The emission surface 28 emits the excitation light internally reflected by the third reflection surface 27 downward.

As described above, the light guide member 20 is arranged so as to protrude toward the front face side from the back face side through the upper side of the light generation unit 30. With this arrangement, the light guide member 20 guides the excitation light emitted from the light source 11 arranged on the back face side of the light generation unit 30 so as to reach the front face side via the upper side of the light generation unit 30, and irradiates a light-emitting layer 32 arranged on the front face of the light generation unit 30 with the excitation light.

The light generation unit 30 is provided for each light guide member 20. A plurality of light generation units 30 are arranged in the left-right direction. The light generation unit 30 is arranged such that a normal direction R of the light-emitting layer 32 is inclined obliquely upward with respect to the front face direction. With this arrangement, the light generation unit 30 makes it easier for the light emitted from the emission surface 28 of the light guide member 20 to reach the light-emitting layer 32. The light generation unit 30 has a holding member 31 and the light-emitting layer 32.

The holding member 31 can cause the excitation light emitted from the light source 11 to pass therethrough. The holding member 31 causes the excitation light to pass therethrough, so that the excitation light is guided inside the holding member 31, and the entire surface of the light-emitting layer 32 described below can be irradiated with the excitation light. In the present embodiment, the holding member 31 has, for example, a rectangular plate shape, and can cause generated light emitted by the light-emitting layer 32 described below to pass therethrough. For example, glass or the like is used as the holding member 31.

The light-emitting layer 32 is held on a first surface 31a of the holding member 31. The light-emitting layer 32 is excited by being irradiated with the excitation light from the light source 11, and emits generated light. The light-emitting layer 32 is held on, for example, the first surface 31a of the holding member 31. The light-emitting layer 32 is formed in a shape corresponding to, for example, the shape of the tail lamp in a front view. For example, the light-emitting layer 32 may be configured to have a predetermined pattern (not illustrated).

In the present embodiment, as the light-emitting layer 32, for example, an organic material obtained by doping a host material such as polyvinyl carbazole with about 5% of a guest material such as acetylacetone is used. In this case, the light-emitting layer 32 emits red light as the generated light. The combination of the host material and the guest material is not limited to the above.

When the light-emitting layer 32 is formed of an organic material, for example, the light-emitting layer 32 can be formed by co-evaporating a host material and a guest material on the holding member 31. Moreover, the light-emitting layer 32 may be formed by a wet method such as a spin-coating method or a spray method. When an organic material is used as the light-emitting layer 32, a substrate made of glass or the like can be used as the holding member 31.

In addition, an inorganic material such as CASN (CaAlSiN₃:Eu) may be used as the light-emitting layer 32. In this case, the light-emitting layer 32 can be formed by applying a mixed material of a transparent resin such as silicone and CASN onto the holding member 31 and baking the mixed material. Moreover, the light-emitting layer 32 can be formed by applying a mixed material of an inorganic material such as low-melting-point glass and CASN onto the holding member 31 and baking the mixed material.

When an inorganic material is used as the light-emitting layer 32, a substrate made of glass or the like can be used as the holding member 31. In addition, other types of materials such as SCASN (Sr,Ca)AlSiN₃:Eu may be used as the light-emitting layer 32.

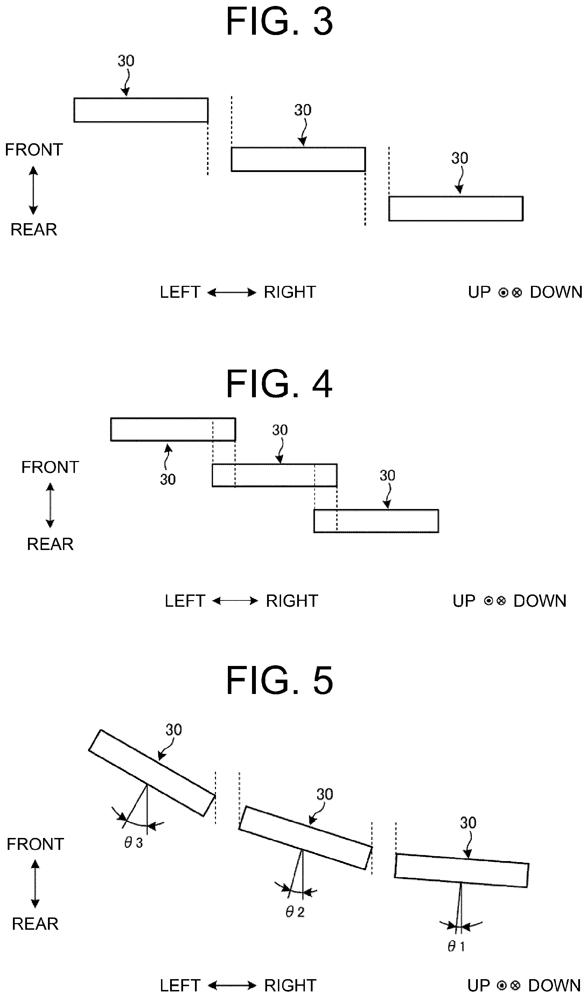

FIGS. 3 to 6 are diagrams illustrating examples of the arrangement of the plurality of light generation units 30. FIGS. 3 to 6 schematically illustrate the plurality of light generation units 30 as viewed from above. In FIGS. 3 to 6, for example, three light generation units 30 are arranged in the left-right direction. The number of the light generation units 30 is not limited to three, and may be two or four or more.

As illustrated in FIGS. 3 to 6, the plurality of light generation units 30 are arranged side by side in the left-right direction in the vehicle-mounted state. In addition, the plurality of light generation units 30 are arranged such that the light generation unit 30 arranged on the vehicle outer side is located closer to the back face side than the light generation unit 30 arranged on the vehicle inner side. With this configuration, since the arrangement corresponds to a so-called slant shape of the vehicle, the plurality of light generation units 30 can be compactly arranged, and a design corresponding to the shape of the vehicle can be achieved.

In the examples illustrated in FIGS. 3 and 4, the plurality of light generation units 30 are arranged such that the normal direction R of the light-emitting layer 32 faces the front face direction. In FIG. 3, the plurality of light generation units 30 are arranged to be separated from each other in the left-right direction. With this arrangement, each light generation unit 30 can form an independent pattern in the light-emitting state. In addition, in FIG. 4, the plurality of light generation units 30 are arranged in a state where adjacent light generation units 30 partially overlap each other in the left-right direction. With this arrangement, a state where light-emitting patterns of the plurality of light generation units 30 are connected to each other in the light-emitting state can be formed.

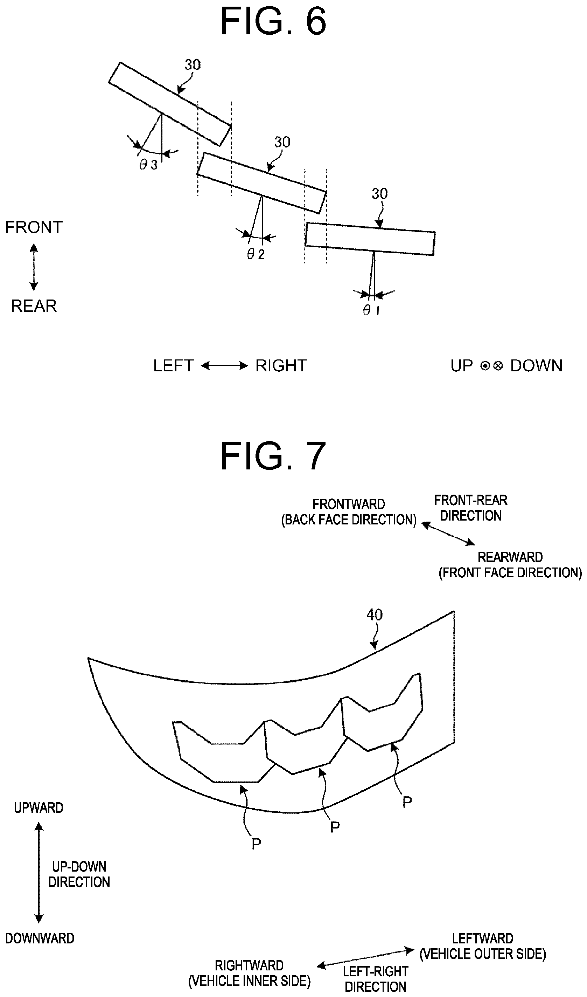

In the examples illustrated in FIGS. 5 and 6, the plurality of light generation units 30 are arranged such that the normal direction R of the light-emitting layer 32 of the light generation unit 30 arranged on the vehicle outer side is inclined to the vehicle outer side with respect to the front face direction compared to that of the light generation unit 30 arranged on the vehicle inner side. With this arrangement, the visibility when viewed from an oblique direction on the vehicle outer side with respect to the front face in the light-emitting state can be ensured. In FIG. 5, the plurality of light generation units 30 are arranged to be separated from each other in the left-right direction. With this configuration, each light generation unit 30 can form an independent pattern in the light-emitting state. In addition, in FIG. 6, the plurality of light generation units 30 are arranged in a state of partially overlapping each other in the left-right direction. With this configuration, a state where light-emitting patterns of the plurality of light generation units 30 are connected to each other in the light-emitting state can be formed.

The lens member 40 is arranged in the front face direction with respect to the light generation unit 30. The lens member 40 has an incident surface 41 and an emission surface 42. Red light, which is the generated light from the light generation unit 30, is incident on the incident surface 41. The emission surface 42 emits the light incident on the incident surface 41 in the front face direction. The lens member 40 causes the red light to pass therethrough, and absorbs light different from the red light. Therefore, excitation light components included in external light are absorbed by the lens member 40. The lens member 40 is held by, for example, the housing 50.

The housing 50 is formed of, for example, a black resin material. The housing 50 supports or houses the light source unit 10, the light guide member 20, the light generation unit 30, the lens member 40, and the light source control unit 60 described above.

Next, an operation of the vehicle lamp 100 configured as described above will be described. The light source 11 can be turned on by supplying power from the light source control unit 60 to the light source 11. When the light source 11 is turned on, the light-emitting layer 32 is irradiated with a part of excitation light Lb emitted from the light-emitting surface 11a directly or via the holding member 31.

When the light-emitting layer 32 is irradiated with the excitation light Lb, the light-emitting layer 32 is excited to emit red light L. A part of the red light L generated in the light-emitting layer 32 is emitted rearward (in the front face direction). Moreover, when a reflection layer is formed on a second surface 31b of the holding member 31, a part of the red light L generated in the light-emitting layer 32 is emitted frontward (in the back face direction), is reflected by the reflection layer, and travels rearward. Therefore, the red light L generated in the light-emitting layer 32 is emitted in the front face direction as planar light. The red light L is incident on the incident surface 41 of the lens member 40, is emitted from the emission surface 42 in the front face direction, and is emitted as, for example, a pattern of a tail lamp.

The light source control unit 60 can perform control such that the power supplied to the light sources 11 increases as the area of the portion where the light generation units 30 overlap each other in the left-right direction increases. For example, compared to the arrangement illustrated in FIG. 3, the arrangement illustrated in FIG. 4 has a larger area of the portion where the light generation units 30 overlap each other in the left-right direction. In this case, the light source control unit 60 can perform control such that the power supplied to the light sources 11 is larger in the configuration in which the plurality of light generation units 30 are arranged as illustrated in FIG. 4 than in the configuration in which the plurality of light generation units 30 are arranged as illustrated in FIG. 3. Similarly, compared to the arrangement illustrated in FIG. 5, the arrangement illustrated in FIG. 6 has a larger area of the portion where the light generation units 30 overlap each other in the left-right direction. In this case, the light source control unit 60 can perform control such that the power supplied to the light sources 11 is larger in the configuration in which the plurality of light generation units 30 are arranged as illustrated in FIG. 6 than in the configuration in which the plurality of light generation units 30 are arranged as illustrated in FIG. 5.

Moreover, the light source control unit 60 can perform control such that the power supplied to the light sources 11 increases as the angle at which the light generation unit 30 is inclined in the vehicle outer side direction with respect to the front face direction increases. For example, compared to the arrangement illustrated in FIG. 3, the arrangement illustrated in FIG. 5 has a larger angle at which the light generation unit 30 is inclined in the vehicle outer side direction with respect to the front face direction. In this case, the light source control unit 60 can perform control such that the power supplied to the light sources 11 is larger in the configuration in which the plurality of light generation units 30 are arranged as illustrated in FIG. 5 than in the configuration in which the plurality of light generation units 30 are arranged as illustrated in FIG. 3. Similarly, compared to the arrangement illustrated in FIG. 4, the arrangement illustrated in FIG. 6 has a larger angle at which the light generation unit 30 is inclined in the vehicle outer side direction with respect to the front face direction. In this case, the light source control unit 60 can perform control such that the power supplied to the light sources 11 is larger in the configuration in which the plurality of light generation units 30 are arranged as illustrated in FIG. 6 than in the configuration in which the plurality of light generation units 30 are arranged as illustrated in FIG. 4.

FIG. 7 is a diagram illustrating an example of the light-emitting state of the vehicle lamp 100. In the example illustrated in FIG. 7, the case where the plurality of light generation units 30 of the vehicle lamp 100 partially overlap each other in the left-right direction and the light generation unit 30 arranged on the vehicle outer side is inclined to the vehicle outer side compared to the light generation unit 30 arranged on the vehicle inner side (the arrangement illustrated in FIG. 6) will be described as an example.

As illustrated in FIG. 7, in the arrangement in which the plurality of light generation units 30 partially overlap each other in the left-right direction, when the vehicle lamp 100 in the light-emitting state is viewed from the front face, light-emitting patterns P by the plurality of light generation units 30 are connected to each other. Therefore, the design in the light-emitting state can be improved.

Moreover, as illustrated in FIG. 7, in the arrangement in which the normal direction R of the light-emitting layer 32 of the light generation unit 30 arranged on the vehicle outer side is inclined to the vehicle outer side with respect to the front face direction compared to that of the light generation unit 30 arranged on the vehicle inner side, the visibility when viewed from a direction corresponding to the slant shape of the vehicle, for example, an oblique direction on the vehicle outer side with respect to the front face of the vehicle lamp 100 can be ensured. Therefore, the design in the light-emitting state can be improved.

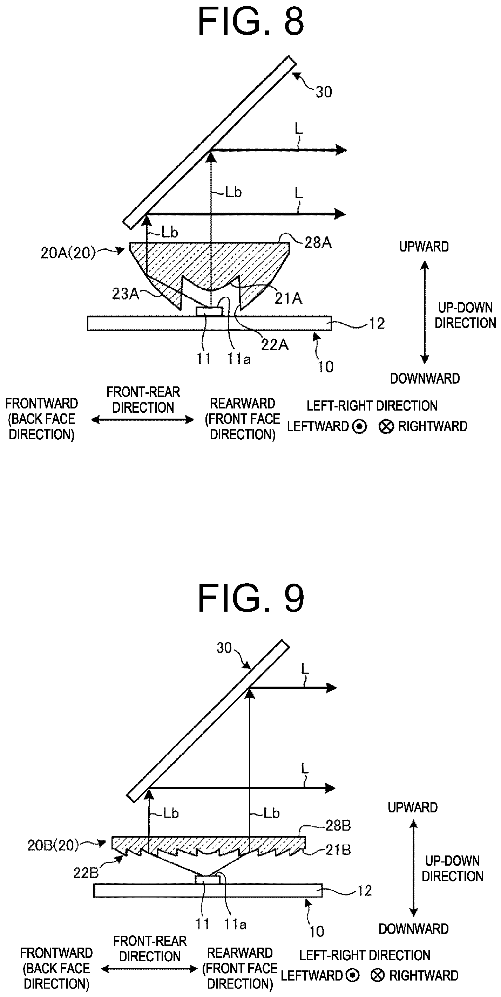

FIGS. 8 to 11 are diagrams illustrating other examples of the arrangement of the light source unit 10, the light guide member 20, and the light generation unit 30. In the example illustrated in FIG. 8, a light guide member 20A is arranged above the light source unit 10, and the light generation unit 30 is arranged above the light guide member 20A. The light guide member 20A has a first incident surface 21A, a second incident surface 22A, and a first reflection surface 23A on a lower surface opposed to the light source unit 10. Moreover, the light guide member 20A has an emission surface 28A on an upper surface opposed to the light generation unit 30. In this case, the excitation light Lb from the light source 11 is incident from the first incident surface 21A and the second incident surface 22A. The excitation light Lb incident from the first incident surface 21A and the excitation light Lb incident from the second incident surface 22A and reflected by the first reflection surface 23A are emitted upward from the emission surface 28A. The light generation unit 30 is irradiated with the excitation light Lb emitted from the emission surface 28A. When the light generation unit 30 is irradiated with the excitation light Lb, the light-emitting layer 32 is excited to emit the red light L, and the red light L is emitted in the front face direction.

In the example illustrated in FIG. 9, a light guide member 20B is arranged above the light source unit 10, and the light generation unit 30 is arranged above the light guide member 20B. The light guide member 20B has an incident surface 21B on a lower surface opposed to the light source unit 10. A Fresnel lens portion 22B is formed on the incident surface 21B. The Fresnel lens portion 22B condenses incident light. Moreover, the light guide member 20B has an emission surface 28B on an upper surface opposed to the light generation unit 30. In this case, the excitation light Lb from the light source 11 is incident from the Fresnel lens portion 22B of the incident surface 21B. The incident excitation light Lb is condensed by the Fresnel lens portion 22B and emitted upward from the emission surface 28B. The light generation unit 30 is irradiated with the excitation light Lb emitted from the emission surface 28B. When the light generation unit 30 is irradiated with the excitation light Lb, the light-emitting layer 32 is excited to emit the red light L, and the red light L is emitted in the front face direction.

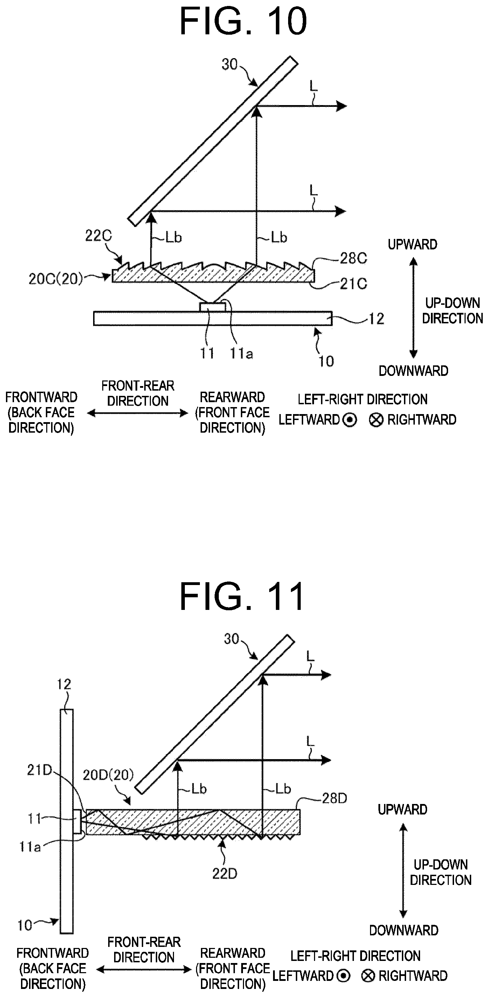

In the example illustrated in FIG. 10, a light guide member 20C is arranged above the light source unit 10, and the light generation unit 30 is arranged above the light guide member 20C. The light guide member 20C has an incident surface 21C on a lower surface opposed to the light source unit 10. Moreover, the light guide member 20C has an emission surface 28C on an upper surface opposed to the light generation unit 30. A Fresnel lens portion 22C is formed on the emission surface 28C. The Fresnel lens portion 22C condenses emitted light. In this case, the excitation light Lb from the light source 11 is incident from the incident surface 21C. The incident excitation light Lb is emitted upward from the emission surface 28C in a state of being condensed by the Fresnel lens portion 22C. The light generation unit 30 is irradiated with the excitation light Lb emitted from the emission surface 28C. When the light generation unit 30 is irradiated with the excitation light Lb, the light-emitting layer 32 is excited to emit the red light L, and the red light L is emitted in the front face direction.

In the example illustrated in FIG. 11, a light guide member 20D is arranged on the front face side of the light source unit 10, and the light generation unit 30 is arranged above the light guide member 20D. The light source unit 10 is arranged in a state where the light-emitting surface 11a of the light source 11 faces the front face. The light guide member 20D is configured to extend toward the front face side from an incident surface 21D opposed to the light source unit 10. The light guide member 20D has a prism portion 22D on a lower surface 27D. The prism portion 22D reflects the excitation light Lb upward in a state where the excitation light Lb guided through the light guide member 20D is diffused. Moreover, the light guide member 20D has an emission surface 28D on an upper surface opposed to the light generation unit 30. In this case, the excitation light Lb from the light source 11 is incident from the incident surface 21D. The excitation light Lb incident from the incident surface 21D travels inside the light guide member 20D toward the front face side, and is reflected upward by the prism portion 22D. The excitation light Lb reflected by the prism portion 22D is emitted upward from the emission surface 28D. The light generation unit 30 is irradiated with the excitation light Lb emitted upward from the emission surface 28D. When the light generation unit 30 is irradiated with the excitation light Lb, the light-emitting layer 32 is excited to emit the red light L, and the red light L is emitted in the front face direction.

As described above, a vehicle lamp 100 according to the present embodiment includes: a plurality of light sources 11 that emit excitation light Lb; a light guide member 20 that is provided for each of the light sources 11 and guides and emits the excitation light Lb from the light source 11; a light generation unit 30 that is provided for each light guide member 20 and has a light-emitting layer 32 that emits generated light by being irradiated with the excitation light Lb emitted from the light guide member 20; a lens member 40 that is provided for each light-emitting layer 32, is arranged on a front face side with respect to the light-emitting layer 32, and emits the generated light from the light-emitting layer 32 in a front face direction in a vehicle-mounted state; and a light source control unit 60 that controls power supplied to the plurality of light sources 11, in which a plurality of the light generation units 30 are arranged side by side in a left-right direction in the vehicle-mounted state and such that the light generation unit 30 arranged on a vehicle outer side is located closer to a back face side than the light generation unit 30 arranged on a vehicle inner side.

According to this configuration, the plurality of the light generation units 30 are arranged side by side in the left-right direction in the vehicle-mounted state, and the light generation unit 30 arranged on the vehicle outer side is located closer to the back face side than the light generation unit 30 arranged on the vehicle inner side. Therefore, an arrangement corresponding to a so-called slant shape of the vehicle can be achieved. Accordingly, the visibility can be improved so as to be clearly visible from the outside.

In the vehicle lamp 100 according to the present embodiment, the plurality of the light generation units 30 are arranged such that adjacent ones of the light generation units 30 partially overlap each other in the left-right direction. According to this configuration, a state where light-emitting patterns of the plurality of the light generation units 30 are connected to each other in the light-emitting state can be formed.

In the vehicle lamp 100 according to the present embodiment, the light source control unit 60 performs control such that the power supplied to the light sources 11 increases as an area of a portion where the light generation units 30 overlap each other in the left-right direction increases. According to this configuration, a decrease in light use efficiency due to the light generation units 30 overlapping each other in the left-right direction can be suppressed.

In the vehicle lamp 100 according to the present embodiment, the plurality of the light generation units 30 are arranged such that the light generation unit 30 arranged on the vehicle outer side is inclined in a vehicle outer side direction with respect to the front face direction compared to the light generation unit 30 arranged on the vehicle inner side. According to this configuration, the visibility when viewed from an oblique direction on the vehicle outer side with respect to the front face in the light-emitting state can be ensured.

In the vehicle lamp 100 according to the present embodiment, the light source control unit 60 performs control such that the power supplied to the light sources 11 increases as an angle at which the light generation unit 30 is inclined in the vehicle outer side direction with respect to the front face direction increases. According to this configuration, a decrease in light use efficiency due to the light generation units 30 being inclined in the vehicle outer side direction with respect to the front face direction can be suppressed.

In the vehicle lamp 100 according to the present embodiment, the light source 11 is arranged on the back face side with respect to the light generation unit 30, and emits the excitation light Lb upward, the light guide member 20 is arranged above the light source 11 and the light generation unit 30, guides the excitation light Lb from the light source 11 to the front face side, and emits the excitation light Lb downward toward the light generation unit 30, and the light generation unit 30 is arranged such that the light-emitting layer 32 is formed in a flat plate shape and a normal direction R of the light-emitting layer 32 is oriented obliquely upward with respect to the front face. According to this configuration, the light source 11, the light guide member 20, and the light generation unit 30 can be compactly arranged in a limited space.

In the vehicle lamp 100 according to the present embodiment, the light guide member 20 has a first incident surface 21 opposed to the light source 11 in an up-down direction and a second incident surface 22 surrounding a lateral side of the light source 11. According to this configuration, each of the excitation light Lb traveling upward from the light source 11 and the excitation light Lb traveling laterally from the light source 11 can be incident on the light guide member 20. Accordingly, the use efficiency of the excitation light Lb can be increased.

In the vehicle lamp 100 according to the present embodiment, a light guide member 20B, 20C has a Fresnel lens portion 22B, 22C that is provided on an incident surface 21B on which the excitation light Lb from the light source 11 is incident or an emission surface 28C from which the excitation light Lb is emitted, and condenses the excitation light Lb. According to this configuration, the use efficiency can be increased by condensing the excitation light Lb from the light source 11 while reducing the thickness of the light guide member 20B, 20C.

In the vehicle lamp 100 according to the present embodiment, a light guide member 20D has a prism portion 22D that internally reflects the guided excitation light Lb such that the excitation light Lb is diffused toward a side of the light-emitting layer 32. According to this configuration, the excitation light Lb can be emitted with a uniform light amount by the prism portion 22D.

The technical scope of the present disclosure is not limited to the above-described embodiment, and appropriate modifications can be made without departing from the spirit of the present disclosure. For example, the arrangement of the light source unit 10, the light guide member 20 (including the light guide member 20A to 20D), and the light generation unit 30 described in the above-described embodiment may be reversed in the up-down direction.

In addition, in the above-described embodiment, the case where the light guide member 20, 20A to 20D that guides and emits the excitation light is used as the optical member has been described as an example, but the present disclosure is not limited to this configuration. Instead of the light guide member 20, 20A to 20D, or in addition to the light guide member 20, 20A to 20D, the optical member may be another optical member such as a lens or a reflection member, or a combination thereof as long as the optical member is configured to emit the excitation light from the light source 11.

### DESCRIPTION OF REFERENCE NUMERALS

L red light
P light-emitting pattern
R normal direction
Lb excitation light
10 light source unit
11 light source
11a light-emitting surface
12 support substrate
20, 20A, 20B, 20C, 20D light guide member
21, 21A first incident surface
21B, 21C, 21D, 41 incident surface
22, 22A second incident surface
22B, 22C Fresnel lens portion
22D prism portion
23, 23A first reflection surface
24 first light guide portion
25 second reflection surface
26 second light guide portion
27 third reflection surface
28, 28A, 28B, 28C, 28D, 42 emission surface
30 light generation unit
31 holding member
31a first surface
31b second surface
32 light-emitting layer
40 lens member
50 housing
60 light source control unit
100 vehicle lamp

## Claims

1. A vehicle lamp (100) comprising:
a plurality of light sources (11) that emit excitation light (Lb);
an optical member (20) that is provided for each of the light sources (11) and emits the excitation light (Lb) from the light source (11);
a light generation unit (30) that is provided for each of the optical members (20) and has a light-emitting layer (32) that emits generated light by being irradiated with the excitation light (Lb) emitted from the optical member (20);
a lens member (40) that is provided for each light-emitting layer (32), is arranged on a front face side with respect to the light-emitting layer (32), and emits the generated light from the light-emitting layer (32) in a front face direction in a vehicle-mounted state; and
a light source control unit (60) that controls power supplied to the plurality of light sources (11), wherein
a plurality of the light generation units (30) are arranged side by side in a left-right direction in the vehicle-mounted state and such that the light generation unit (30) arranged on a vehicle outer side is located closer to a back face side than the light generation unit (30) arranged on a vehicle inner side.

2. The vehicle lamp (100) according to claim 1, wherein
the plurality of the light generation units (30) are arranged such that adjacent ones of the light generation units (30) partially overlap each other in the left-right direction.

3. The vehicle lamp (100) according to claim 2, wherein
the light source control unit (60) performs control such that the power supplied to the light sources (11) increases as an area of a portion where the light generation units (30) overlap each other in the left-right direction increases.

4. The vehicle lamp (100) according to claim 1, wherein
the plurality of the light generation units (30) are arranged such that the light generation unit (30) arranged on the vehicle outer side is inclined in a vehicle outer side direction with respect to the front face direction compared to the light generation unit (30) arranged on the vehicle inner side.

5. The vehicle lamp (100) according to claim 4, wherein
the light source control unit (60) performs control such that the power supplied to the light sources (11) increases as an angle at which the light generation unit (30) is inclined in the vehicle outer side direction with respect to the front face direction increases.

6. The vehicle lamp (100) according to claim 1, wherein
the optical member (20) is formed of a light guide member (20),
the light source (11) is arranged on the back face side with respect to the light generation unit (30), and emits the excitation light (Lb) upward,
the light guide member (20) is arranged above the light source (11) and the light generation unit (30), guides the excitation light (Lb) from the light source (11) to the front face side, and emits the excitation light (Lb) downward toward the light generation unit (30), and
the light generation unit (30) is arranged such that the light-emitting layer (32) is formed in a flat plate shape and a normal direction (R) of the light-emitting layer (32) is oriented obliquely upward with respect to the front face.

7. The vehicle lamp (100) according to claim 1, wherein
the optical member (20) is formed of a light guide member (20), and
the light guide member (20) has a first incident surface (21) opposed to the light source (11) in an up-down direction and a second incident surface (22) surrounding a lateral side of the light source (11).

8. The vehicle lamp (100) according to claim 1, wherein
the optical member (20) is formed of a light guide member (20B, 20C), and
the light guide member (20B, 20C) has a Fresnel lens portion (22B, 22C) that is provided on an incident surface (21B) on which the excitation light (Lb) from the light source (11) is incident or an emission surface (28C) from which the excitation light (Lb) is emitted, and condenses the excitation light (Lb).

9. The vehicle lamp (100) according to claim 1, wherein
the optical member (20) is formed of a light guide member (20D), and
the light guide member (20D) has a prism portion (22D) that internally reflects the guided excitation light (Lb) such that the excitation light (Lb) is diffused toward a side of the light-emitting layer (32).
